# EUROPEAN PATENT SPECIFICATION

(11) **EP 4 176 766 B1**
(45) Date of publication and mention of the grant of the patent: **05.06.2024**
(21) Application number: 22200601.7
(22) Date of filing: 10.10.2022
(51) Int. Cl.: A46B 13/00, A46D 1/00, B60S 3/06

(54) **BRUSH FOR VEHICLE WASHING SYSTEM**
BÜRSTE FÜR FAHRZEUGWASCHANLAGE
BROSSE POUR SYSTÈME DE LAVAGE DE VÉHICULE

(30) Priority: 09.11.2021 NL 2029698
(43) Date of publication of application: 10.05.2023
(73) Proprietor: Spatz Actief B.V., 5349 TA Oss (NL)
(72) Inventor: MUSKENS, Roel, 5349 TA Oss (NL)
(74) Representative: Patentwerk B.V.

(56) References cited:
- WO-A1-96/33638
- WO-A1-2010/010593
- US-A- 5 946 761
- US-A- 6 035 482
- US-A1- 2013 104 332

## Description

The invention relates to a brush for a vehicle washing system.

The invention further relates to a brush assembly comprising an axis and multiple adjacent brushes according to the invention. The invention also relates to the use of such brush and to a method of producing a brush for a vehicle washing system.

Vehicle washing systems make use of a wide variety of bushes which are specifically designed for the intended part of the washing cycle of a vehicle. Brushes are typically designed for either washing or drying and can also be designed for a specific part of the vehicle. For example, the material of the brush elements and the dimensions of the brush can be adapted for the intended purpose. The parts of the brush which are or could be in direct contact with the vehicle are preferably substantially soft in order to avoid damage of the vehicle. Hence, also relatively hard components such as mechanical fixing means are to be avoided for this reason. Therefore, bushing elements of the brush which are to be in direct contact with the vehicle are often made of relatively soft or foamed polymers and/or textile and are typically glued to a brush body. Glue is easy to use and is suitable for use in large scale productions. A drawback of the use of glue or adhesives is that such brushes may have a limited thermal resistance and/or a limited strength.

US6035482 discloses a brush for vehicle washing.

It is a goal of the invention to provide an improved brush for vehicle washing system which takes away at least some of the known disadvantages, or to at least provide an alternative to the known brushes.

The invention provided thereto a brush for a vehicle washing system, comprising:
- at least one brush body comprising at least one, and preferably multiple receiving spaces;
- at least one, and preferably multiple brush elements; and
- at least one cover element;

wherein at least part of at least one brush element, and preferably of each brush element, is received within part of a(n individual) receiving space and wherein at least a further part of said brush element extends with respect to the brush body;
and wherein the cover element is attached to the brush body such that said cover element covers at least part of the receiving spaces, wherein at least part of the brush body and at least part of at least one cover element are made of a polymer material and wherein the brush body and the cover element are connected via plastic welding.

The brush according to the present invention has several benefits over conventional brushes for vehicle washing system. Since at least one cover element covers at least part of the receiving spaces, preferably at least part of the receiving spaces in which at least part of a brush element is received, the brush elements can be assembled with or within the brush body in a relatively simple but effective manner. Due to the use of at least one polymer based brush body and at least one polymer based cover element which are mutually attached by means of plastic welding the use of glue, adhesive and/or mechanical fixation means can be omitted. The brush elements will be at least partially enclosed between the brush body and at least one cover element, in particular such that the brush elements are received within the receiving spaces in a relatively secure manner. Said enclosed configuration making use of receiving spaces further provides a relatively stable configuration for both the brush body and the brush element(s). The brush elements may provide a reinforcing function to the brush body whereas the brush elements may experience support from the embedded configuration. Hence, the brush element configuration according to the present invention wherein the brush elements are received within a receiving space of the brush body is for several reasons preferred over an attachment where brush elements are attached onto the outer surface of the brush body. The brush according to the present invention further benefits of a relatively simple configuration which can be efficiently produced, even on a large scale, due to the mutual co-action between the brush body, at least one cover element and the multiple brush elements.

The brush according to the present invention typically comprises at least one cover element. The at least one cover element basically has multiple functions. The at least one, or each, cover element covers at least part of the receiving spaces such that the brush elements are received within the brush body, and in particular in the receiving spaces thereof, in a secure manner. The brush body and at least one cover element are preferably attached such that they secure at least part of at least one, and preferably each brush element within a receiving space. The material choice of at least one cover element and the brush body which are both made of a polymer material enables that plastic welding can be applied to mutually connect said elements. Plastic welding is preferably performed by applying heat. The plastic welding will provide a severe and reliable connection between the brush body and at least one cover element. Plastic welding further benefits of being relatively cheap and easily applicable for large scale production. The brush according to the present invention will benefit of a relatively good thermal and/or chemical resistivity, amongst others due to the omittance of glue and/or adhesives. The attachment via plastic welding will withstand a wide range of temperature and chemical influences.

The at least one brush body basically forms the core of the brush as such. The brush body comprises multiple receiving spaces, wherein at least one receiving space, and preferably each receiving space, is configured for receiving at least part of a brush element. It may also be said that at least one brush body is provided with multiple receiving spaces. The brush body comprises individual receiving spaces wherein each receiving space is configured for receiving part of at least one brush element. The receiving spaces can be provided at a predetermined distance from another. The receiving spaces, and thus the brush elements received therein, can be circumferentially spaced over the brush body. The brush body may comprise further accommodating spaces for a further purpose, preferably not configured or suitable for receiving brush elements. It is conceivable that such accommodating spaces are not covered by the at least one cover element.

The brush according to the present invention typically comprises multiple brush elements. Said brush element are preferably configured to contribute to or to perform a drying, wetting and/or washing act. Preferably at least part of a distal end of the brush elements extends or protrudes with respect to the brush body. The brush according to the present invention is preferably rotatable. The brush can for example be a rotary brush. At least part of the brush elements preferably transversely and/or radially project or extend with respect to the brush body. The brush elements may for example extend or project from an outer edge and/or a circumferential edge of the brush body. The functional characteristic of the brush elements depend on the applied material and dimensions. The brush elements are typically at least partially flexible. At least part of the brush elements which extend with respect to the brush body are substantially mobile and/or movable. The brush elements could also be referred to as brushing elements.

The brush for a vehicle system according to the present invention may also be used as a brush for a vehicle polishing system, a vehicle buffing system and/or a vehicle drying system. The type of brush element chosen to use in the brush according to the present invention may depend on the application.

At least part of the brush body and at least part of at least one cover element are preferably made of a substantially similar polymer material. This may contribute to an improved plastic welding ability of the components. Hence, such configuration will positively contribute to the ease wherein a plastic welded attachments between the brush body and the at least one cover element can be obtained. It may further result in good mutual cooperation of the brush elements. In a further preferred embodiment, at least part of the brush body and/or at least part of at least one cover element are made of a polymer foam. At least part of the brush body and/or at least part of at least one cover element are preferably made of a closed cell foam. However, said polymer foam could alternatively also be an open cell foam. Polymer foam is relatively cheap and has good machinable properties. The polymer foam applied is preferably substantially dimensional stable. It is conceivable that at least part of the brush body and/or at least part of the cover element are made of a polymer material comprising and/or extruded polyethylene, and/or closed cell foam and/or open cell foam and/or polyethylene foam and/or polyurethane foam.

The brush elements may be manufactured from a similar polymer as the cover element and the brush body. Alternatively, the brush element may comprise a laminate comprising at least one polymer layer and at least another polymer and/or non-polymer layer. A laminated brush element may comprise a polymer layer and a textile layer, such as a non-woven textile layer and/or woven textile layer. It is also possible to use another material which is suitable to be laminated with a polymer foam, such as a non-woven microfiber textile. Said examples are preferably used for a vehicle washing system, or a vehicle buffing system or a vehicle polishing system. A brush for a vehicle drying system preferably uses laminated brush elements comprising at least one polymer foam layer and at least one drying textile layer. All brush elements may be manufactured from the same material laminate. It is also possible that several brush elements of different materials may be used in a brush according to the present invention. Hybrid brush elements may be manufactured by flame lamination.

In a further preferred embodiment, at least part of the receiving spaces are provided at or near an outer edge and/or a circumferential edge of the brush body. It is conceivable that at least one receiving space, and preferably each receiving space, is provided at an outer edge of the brush body such that at least part of the brush elements received in said receiving spaces, transversely and/or radially project or extend with respect to the brush body in an assembled configuration. The brush elements may for example extend or project from an outer edge and/or a circumferential edge of the brush body. It is conceivable that all brush elements are provided in a space or volume defined by a radial extension of the brush body. It is for example also conceivable that at least part of the receiving spaces extend from an outer edge of the brush body towards a centre or central region of the brush body.

The brush elements are typically substantially longitudinal. At least part of the receiving spaces may also be substantially longitudinal. It is for example possible that at least one receiving space, and preferably each receiving space, defines a channel and a core segment. The channel can be more narrow than the core segment. The channel may for example form a(n) (side) entrance for the brush element. The channel may also form an exit for the (distal) part of the brush element and/or may be configured to guide part of the brush element towards an outer edge of the brush body. At least part of the brush element may have a shape which is complementary to the receiving space. The brush element may for example at least partially have a complementary shape to the channel and/or core segment of the receiving space. Hence, a substantially form fitting insertion of part of the brush element in the receiving space may be established. As indicated above, at least part of the brush element may be substantially embedded within the receiving space. The core segment of the receiving space may have various shapes. It is for example conceivable that the core segment is substantially circular. However, it is also imaginable that at least part of the core segments are square, triangle and/or polygon shaped.

It is conceivable that that the brush comprises at least one support member which is received within at least one receiving space. The support member can for example be substantially enclosed by at least part of a brush element. It is preferred to use at least one support member which is enclosed by at least part of at least one brush element and/or which is received within at least one receiving space for several reasons. An embodiment is conceivable wherein at least one brush element comprises at least one support member which is preferably made of a polymer material. It is preferred that the at least one support member is made of a polymer material as this enables that the support member can be attached to at least one cover element and/or the brush body by means of plastic welding. The support member can be made of the material applied for the cover element(s) and/or the core body. The support member and the brush element are preferably made of different materials. It is preferred that the support member is substantially enclosed by at least part of a brush element. The support member(s) and the brush body can both be attached to at least one cover element in particular such that the brush element(s) is embedded between the brush body and the support member. This will result in a secure position for the brush element. The support member can for example be a rod. It is also conceivable that at least part of the support member is complementary to the core segment of the receiving space. The support member is preferably shaped such that its circumference is shaped complementary to and/or in the same shape as the circumference of the core segment of the receiving space. However, the circumference of the support member may be slightly smaller/shorter than the circumference of the core segment of the receiving spaces. Conceivable shapes are a circle or any polygonal shape such as squared or hexagonal. The support member may also be conical shaped. The support members preferably have sufficient surface area to enable plastic welding in an effective manner. It is for example possible that at least part of the part of the brush body which is removed to form a receiving space is applied as support member. The support member can have the same thickness as the thickness of the brush body. The support member can also extend over the entire thickness of the brush body. It is conceivable that the support member is combined with at least part of the brush element prior to insertion of the assembly of the brush element and the support member into the receiving space. The support member can for example also be an insert. Said insert can be configured to be inserted into the receiving space of the brush body. It is also possible that the support member forms part of a brush element. It is conceivable that the brush comprises multiple support members.

It is imaginable that at least one and preferably each receiving space extends over the entire thickness of the brush body. Such configuration of receiving spaces would be relatively easy to manufacture. The receiving spaces may for example form through holes within the brush body. The received spaces can for example be cut out of the brush body. This could for example be done by laser cutting, waterjet cutting and/or mechanical cutting. It is conceivable that the brush body comprises at least two opposing side surfaces, wherein at least one, and preferably each receiving space extends between said side surfaces. In addition to the ease of manufacturing, such embodiment also positively contributes to the ease of placement of brush elements into the receiving spaces. The brush elements can for example be placed into a receiving space via a lateral displacement.

In case at least one receiving space, or possibly all receiving spaces extend over the entire thickness of the brush body, it might be beneficial that the brush comprises at least two cover elements. It is conceivable that the cover elements substantially cover at least part of both side surfaces of the brush body. It is also conceivable, and preferred, that a rim or outer edge of the brush body is not covered by at least part of a cover element. The cover elements could for example be substantially flat. In a possible embodiment, the brush comprises at least two cover elements, wherein the brush body comprises at least two opposing side surfaces and wherein a first cover element is attached to a first side surface and a second cover element is attached to a second side surface such that said cover substantially elements enclose at least part of the brush body and preferably at least part of the receiving spaces. In case multiple cover elements are applied, preferably each cover element is made of a polymer material and attached to the brush body via plastic welding. In case support members are applied, said support members can be attached to both the first cover element and the second cover element. In such way, the brush elements can be embedded within the brush body in an effective manner.

In a beneficial embodiment, at least part of the brush body defines a disk shape. Hence, the brush body, and the brush as such, may act as a rotatable disk. The brush body may comprises at least two opposing side surfaces and a rim or outer edge located between said side surfaces. The thickness of the brush body can be defined by the thickness (or width) of said rim or outer edge. The cover element(s) may have a substantially similar shape as a side surface of the brush body. In this way, a relatively large contact surface between the brush body and the cover element(s) can be obtained which will enable the provision of a decent and strong connection between said brush components. It is conceivable that the plastic welding causes the brush body, cover element(s) and/or support member(s) to merge and/or fuse together. The brush elements are made of a polymer material having a higher melting temperature. This will result in that the brush element would typically not be affected during the plastic welding step. The brush body preferably comprises at least one opening, preferably a central opening. The opening can be substantially central positioned within the brush body. Said central opening enables that the brush can be position over an axis or element of the vehicle washing system. The central opening can be of any suitable shape dependent on the vehicle washing system the brush is intended for. Hence, the opening can be substantially circular, square, triangle and/or polygon. It is also conceivable that the opening is provided with one or more coupling members. Such coupling members, if applied, can be configured for mutual co-action with part of the vehicle washing system. The brush body according to the present invention can for example be substantially symmetrical. This may positively contribute to the stability of the brush during use.

A preferred embodiment of the brush according to the present invention comprises a brush body which comprises at least one and preferably multiple protruding stability members, wherein at least one, and preferably each stability member is positioned between (two) adjacent brush elements. Said at least one stability member and preferably multiple protruding stability members project transversely and/or radially with respect to the brush body. The stability members are in particular configured for providing guidance and/or stability for the brush elements in particular during a washing operation. Typically, the brush according to the present invention is configured for rotational movement due to rotation of an axis on which the brush is (temporarily) affixed. The rotational movement of the axis will cause the brush to rotate as well and the brush elements will successively get into contact with a vehicle to be washed. The stability members may smoothen the movement of the brush elements and to stabilise the brush. The stability members can provide a dampening effect with regard to the mobile, extending part of the brush elements. In a preferred embodiment, at least one stability member and preferably each stability member forms integral part of the brush body. Hence, the stability members can be integrally connected to the brush body. It is also conceivable that the brush body defines multiple stability members. The brush body and the stability members can be made out of one piece. The stability members are preferably provided next to a receiving space. It is possible that the side wall of the receiving space, in particular a channel of the receiving space, extends towards the side wall of the stability member. It is conceivable that the number of stability members equals the number of receiving spaces. It is for example possible that each stability member is provided adjacent to a receiving space. In such way the stability member can optimally co-act with a brush element. It is also conceivable that each receiving space is enclosed between two stability members protruding from opposing sides of the receiving space. The number of stability members preferably equals the number of brush elements. However, it is also conceivable that multiple brush elements are received in an individual receiving space. Preferably, in between individual receiving spaces a stability element is positioned. The brush according to the present invention typically comprises at least 4 brush elements, preferably at least 8, more preferably at least 12. It is also conceivable that the brush comprises up to 20 or 30 brush elements. The suitable number of brush element also depends on the application of the brush and the dimensions thereof. The stability members typically have a length which is shorter than the part of the brush element which extends with respect to the brush body. The ratio of the length of at least one stability member with respect to an adjacent brush element is for example at least 1:5. It is also conceivable that the ratio is in the range of 1:4 to 1:2.

The brush elements are preferably at least partially made of different material than where the brush body and/or the cover element(s) are made of. The brush element can for example be made of a polymer material, a textile and/or a hybrid version thereof. The brush element could also be at least partially made of a foam material, for example an open cell foam and/or a closed cell foam. It is also imaginable that at least part of the brush elements are made of a woven and/or non-woven material, in particular a woven and/or non-woven textile. The brush element can also comprise a laminate of materials. It is possible that the brush element comprises a laminate layer which is susceptible for the plastic welding step applied during fabrication. Hence, part of the brush element can also be attached to the brush body and/or at least one cover element via plastic welding.

Preferably, the brush element is manufactured from one sheet of (laminated) material. This is a simple and solid construction. It is also possible that the brush element comprises multiple parts, such that the part which extends with respect to the brush body can be replaced. This is advantageous in case the tip or a part of a brush element is damaged, because it allows a replacement of one brush element instead of accepting a damaged brush element or replacing the entire brush. The brush element may for this purpose comprise complementary parts using velcro and/or hook-and-loopfasteners for a temporary but solid connection between the parts.

In an embodiment all brush elements may be composed of the same material. Alternatively, one brush may comprise brush elements composed out of different materials. The brush elements may be chosen depending on the desired application, for example washing, polishing, buffing, soaping, removing filth or drying.

In an alternative embodiment, the brush body can be a modular brush body. The brush body can for example comprise at least two body parts which can be mutually connected. The body parts can then enclose at least part of the brush elements. It is also conceivable that at least one cover element as described above forms a body part of the modular brush body.

In an alternative embodiment, the invention also relates to a brush for a vehicle washing system, comprising at least one brush body comprising at least one, and preferably multiple receiving spaces; at least one, and preferably multiple brush elements; and at least one cover element; wherein at least part of at least one brush element, and preferably of each brush element, is received within part of a(n individual) receiving space and wherein at least a further part of said brush element extends with respect to the brush body; and wherein the cover element is attached to the brush body such that said cover element covers at least part of the receiving spaces, wherein at least part of the brush body and at least part of at least one cover element are preferably made of a polymer material and wherein the brush body and the cover element are connected together by a glue and/or an (laminated) adhesive. Glue has the advantage that no expensive installations or machines are necessary to make the connection between the cover element and the brush body. Glue is easy to buy and apply. Several types of glues or adhesives are suitable. In an embodiment, the parts may be glued together by applying glue on both parts to be connected. Alternatively, the cover element may be provided with an adhesive covered by a protective film (adhesive tape). Before connecting the cover element and the brush body together, the film is removed to expose the adhesive on the cover element. The side of the cover element which is covered with adhesive is pressed against the brush body comprising brush elements in the receiving spaces and thus connecting the cover element and brush body. Any material or polymer which is suitable to be glued may be used in this alternative embodiment. Any of the indicated embodiments for the brush body, brush elements, receiving spaces, cover element and further components can be applied for this embodiment.

The invention further relates to the use of a brush according to the present invention.

The invention also relates to a brush assembly comprising an axis and multiple adjacent brushes according to the present invention. In such assembly, the brush bodies of the brush are typically fixated on, op positioned upon, said axis, preferably adjacent and in contact to each other and positioned such that the receiving spaces are mutually aligned.

The invention additionally relates to a method of producing a brush for a vehicle washing system, according to the present invention, comprising the steps of:
- providing at least one brush body comprising multiple receiving spaces, wherein at least part of said brush body is made of a polymer material;
- providing multiple brush elements and positioning at least part of at least one brush element and preferably each brush element in a receiving space such that at least a further part of said or each brush element extends with respect to the brush body;
- providing at least one cover element wherein at least part of said cover element is made of a polymer material, and positioning the at least one cover element upon the brush body such that said cover element covers at least part of the receiving spaces; and
- attaching the cover element to the brush body via plastic welding.

The method according to the present invention has several benefits. The brush according to the present invention further benefits of a relatively simple configuration which can be efficiently produced, even on a large scale, due to the mutual co-action between the brush body, at least one cover element and the multiple brush elements. The method may include a cutting operation, for example laser cutting or waterjet cutting, for cutting out the brush body from a polymer material, in particular a polymer foam. Said step may also include the provision of the receiving spaces. Hence, the method may also include the step of providing multiple receiving spaces into the brush body. The brush body, brush element(s), receiving spaces and cover element(s) may be any of the embodiment disclosed for the present invention. Preferably, at least one brush element comprises at least one support member which is made of a polymer material, such that the support member(s), brush body and cover element(s) can be mutually attached via plastic welding. Any of the abovementioned embodiments of the brush and its components are applicable to the method according to the present invention.

The present invention will further be elucidated according to the following non-limitative figures, wherein:
- Figure 1a shows an embodiment of a brush according to the present invention, and
- Figure 1b shows an exploded view of the brush of figure 1a; and
- Figure 2a-2d show a schematic and detailed view of various embodiments of receiving spaces in a brush body according to the present invention; and
- Figures 3a- 3h show a schematic side view of various embodiments of a brush body wherein shape and dimensions of the protruding stability members vary.
- Figures 4a-4h show a schematic side view of various embodiments of a brush body comprising a preferred embodiment of the protruding stability members with various central openings of various shapes; and
- Figure 5a shows a perspective view on a brush element; and
- Figure 5b shows a perspective view on a brush element as used in the brush according to the present invention; and
- Figure 6 shows an embodiment of a brush assembly according to the present invention.

Within these figures, similar reference numbers correspond to similar or equivalent elements or features.

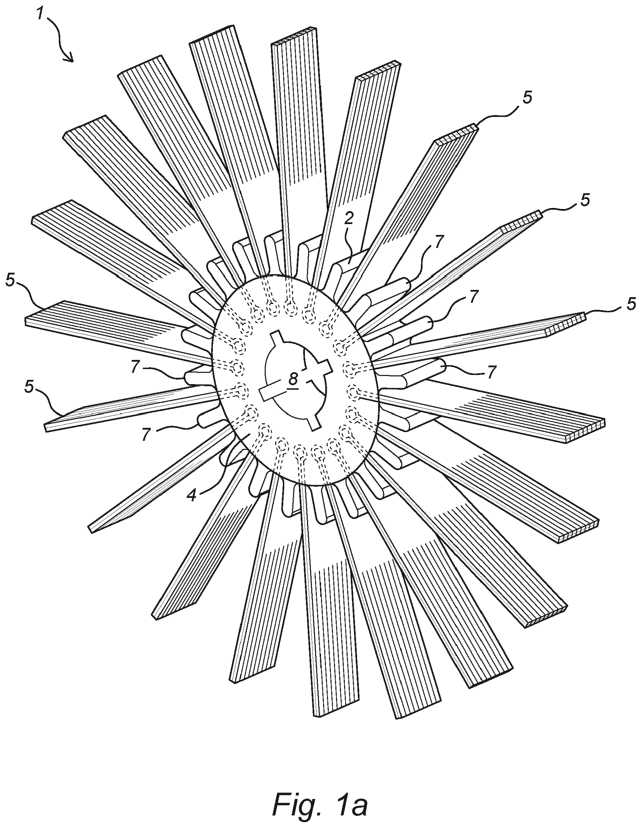

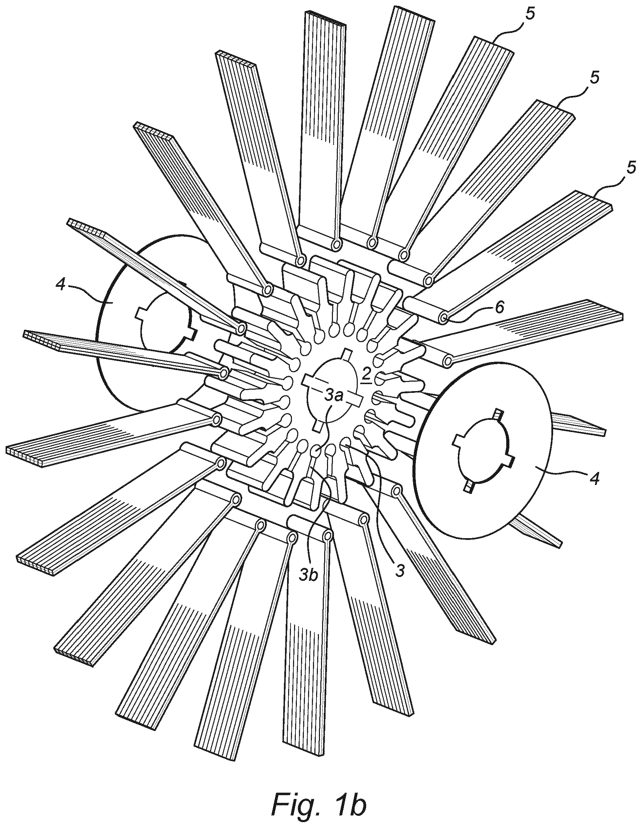

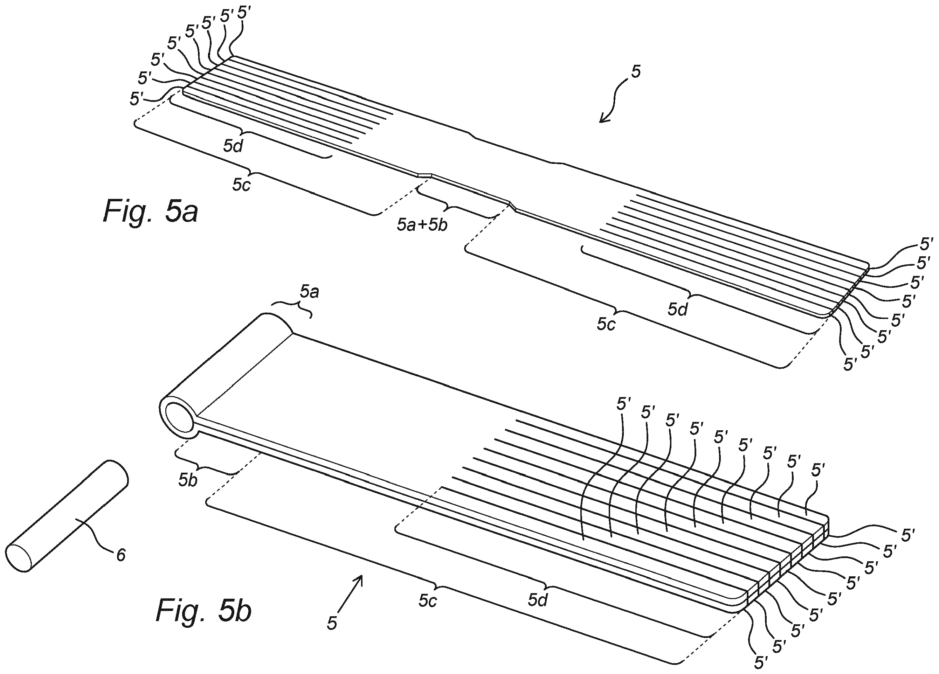

Figure 1a and 1b show an embodiment of a brush 1 for a vehicle washing system according to the present invention. Figure 1a shows an assembled configuration of the brush 1 whereas figure 1b shows an exploded view. The embodiment of a brush 1 according to the present invention comprises a brush body 2, wherein multiple brush elements 5 are contained in receiving spaces 3. The brush body 2 is configured for use in a vehicle washing system, wherein the brush 1 may rotate during washing operation. The brush body 2 may be mounted on an axis within the vehicle washing system. The brush elements 3 of the brush 1 get successively in contact with the vehicle to be washed, due to the rotational movement. The material of the brush element 3 depends on the application. In this embodiment a foam material is shown, which is further elucidated in figure 5. For containing the brush elements 5 the brush body 2 comprises multiple receiving spaces 3, wherein each receiving space 3 contains a brush element 5. From an individual receiving space 3, a brush element 5 extends with respect to the brush body 2. In the shown embodiment the brush elements 5 extend in a plane perpendicular to the circumference of the brush body 2. The brush 1 further comprises a cover element 4, which covers at least part of the receiving spaces 3 and at least a part of the brush body 2. At least a part of the cover element 4 and at least a part of the brush body are made of a polymer material, preferably the same polymer material. The cover element 4 is connected via plastic welding to the brush body 2.

In the shown embodiment, the brush 1 comprises a brush body 2 with multiple receiving spaces 3, wherein the receiving spaces 3 are oriented circular and concentric with respect to the central opening 8. The receiving spaces 3 are each configured to receive a brush element 5 with a support member 6. In figure 1a it is shown that the receiving space is filled with part of a brush element 5 and a support member 6. In the shown embodiment, the receiving spaces 3 extends over the entire thickness of the brush body 2. In the exploded view the brush element 5 is folded around the support member 6, in the way wherein the parts are present in the assembled brush 1. The support member 6 and the core 3a of the receiving space 3 have a complementing shape, wherein the core 3a of the receiving space 3 is slightly bigger than the support member 6 and slightly smaller than the outer dimensions of the support member 6 plus the thickness of the brush element 5. All brush elements 5 comprise a first part 5a which is received in the core 3a of the receiving space 3, a second part 5b which runs through the channel 3b of the receiving space and a third part 5c which protrudes from the brush body 2. The channel 3b runs from the core 3a to the circumference of the brush body 2. The brush element part 5c is flexible and during washing operation will move back and forth in a direction concentric with the brush body 2. In this embodiment each brush element 5 comprises one first part 5a, two second parts 5b, and two third parts 5c, which is further elucidated in figures 5a and 5b.

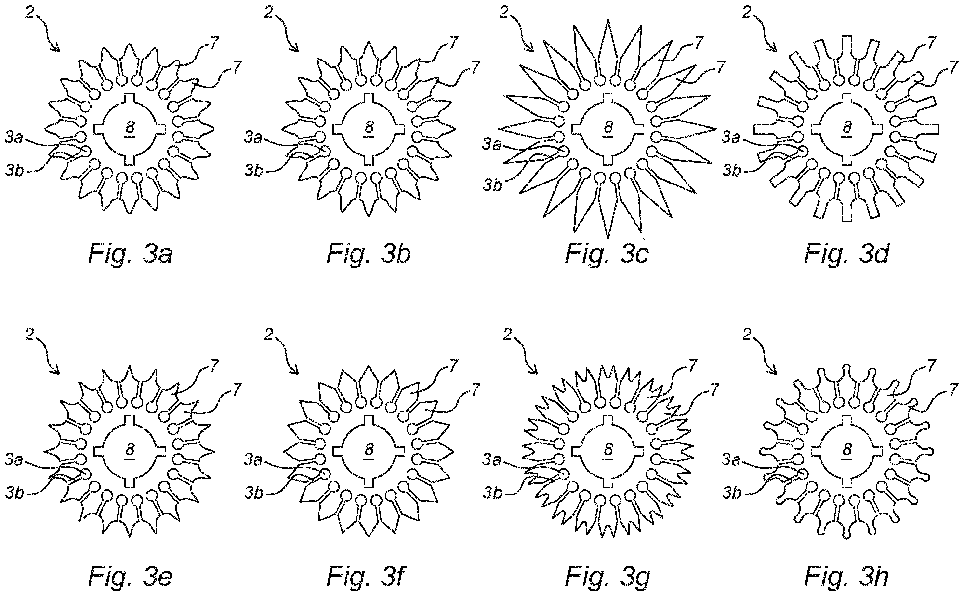

The shown embodiment comprises two cover plates 4, on opposite sides of the brush body 2. The cover plates 4 cover at least all core parts 3a of the receiving spaces 3 and part of the brush body 2 at their respective side of the brush body 2. In figure 1a the cover plate is translucent for illustrative purposes to show the configuration of the support members 6, with respect to the brush body 2 and cover plate 4. In the brush 1 according to the present invention the brush elements 5 are locked in the brush body 2 due to the connection between the support member 6 and the cover plate 4 and the connection between the brush body 2 and the cover plate 4. Both connections are preferably made by plastic welding. The cover plate 4 is thus connected to both the support members 6 and the brush body 2. In the shown embodiment, the brush body 2, cover plates 4 and support members 6 are made from the same polymer material and are fixated/connected together via plastic welding and thus locking in the brush elements 5. This way the brush elements 5 are fixated within the brush 1. The brush elements 5 may each comprise the same configuration, but the brush may also alternatingly comprise brush elements of different materials. The brush element 5 may also comprise a laminate of material sheets. Depending on the application, the brush elements may comprise fingers 5' at the tip of the brush element, as also shown in figure 5. The figure further shows protruding stability members 7, which are positioned in between two receiving spaces 3. Figure 3 shows various embodiments of these protruding stability members 7. The brush further comprises a central opening 8 for mounting on an axis in a vehicle washing system. The axis may be positioned either horizontally or vertically with respect to the vehicle to be washed. The brush comprises a predetermined shaped central opening 8, which is complementary with the axis of the vehicle wash system where the brush according to the present invention is used.

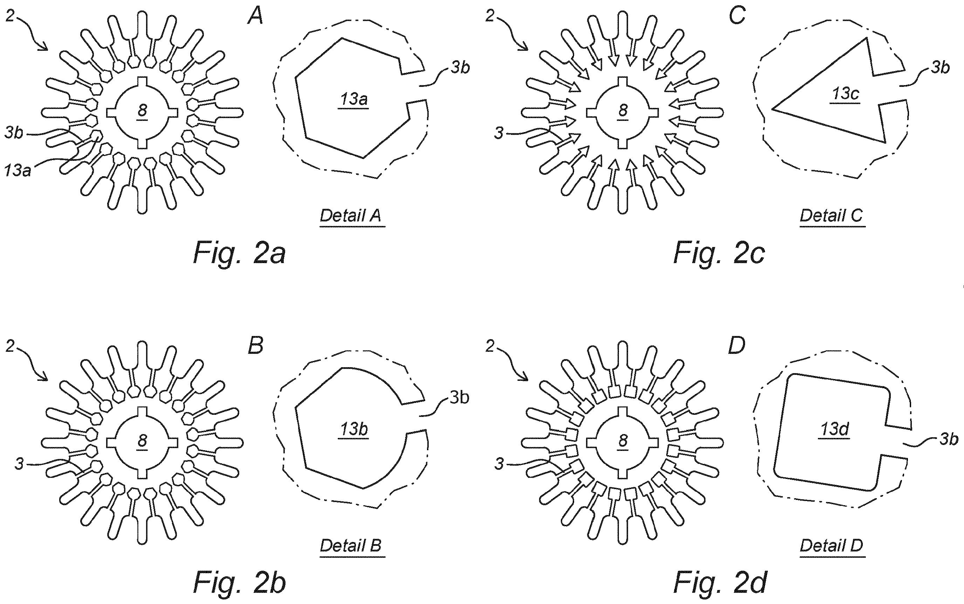

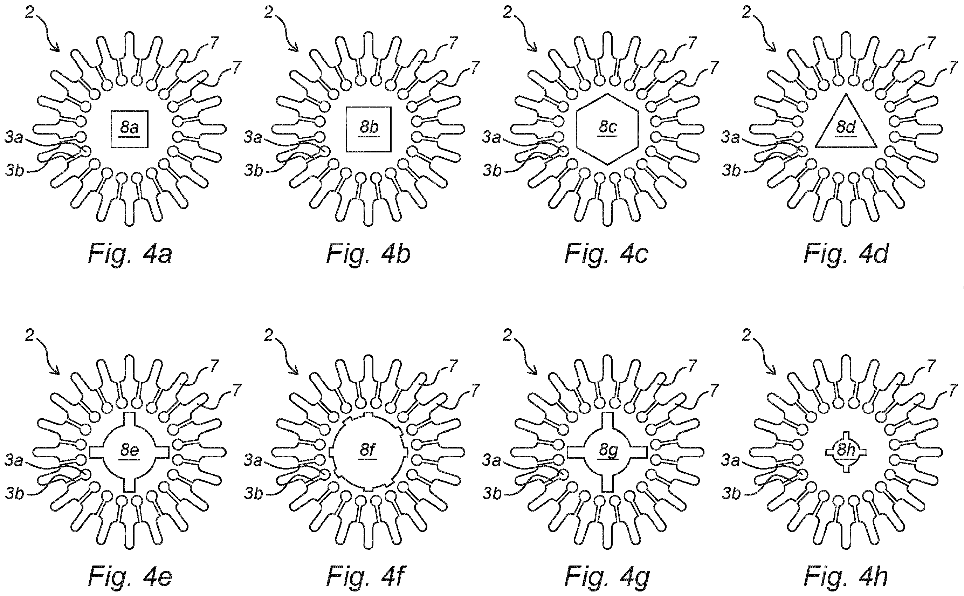

Various embodiments of the brush body 2 are possible. The figures 2, 3 and 4 show some of these variations, wherein different shapes of the receiving spaces (figure 2), protruding stability members (figure 3) and central opening (figure 4) are shown. These are alle non-limitative examples and show an impression of various embodiments of a single brush body 2 according to the present invention.

Figures 2a-2d show embodiments of brush bodies 2 with variations to the round core 3a of the receiving space 3 as shown in figure 1, all variations have in common that a straight channel 3b runs between the core of the receiving space and the circumference of the brush body 2. In figure 2a the receiving space 13 a shows hexagonal core 13a and a straight channel 3b from one of the sides of the hexagonal shaped core. Figure 2b shows a pentagonal alike shaped receiving space core 13b, wherein the channel runs straight from a point where two sides of a pentagonal are touching. The sides adjacent to the channel are curved, whereas the other three opposing sides are more straight. Figure 2c shows a triangular core 13c, where the channel runs from the middle of one side of the triangle. Figure 2d shows a rectangular, in particular square, shaped core 13c, which is positioned such that the channel runs from the middle of one side of the rectangular shape. All corners of the shapes used for the core may be rounded in various degrees, the embodiments shown are examples and serve to show that several options are possible. The shape of the support member will be complementary to the shape of the core of the receiving space and be adjusted according to the shape chosen for the receiving space.

Figures 3a- 3h show a schematic side view of various embodiments of a brush body 2 wherein shape and dimensions of the protruding stability members 7 vary. The shape and size of the protruding stability members 7 may vary depending on the material properties chosen for the brush body 2, stability members 7 and brush elements (not shown). All shown embodiments have in common that the protruding stability members are integral part of the brush body, because this is a preferred way of a cost-effective manufacturing of the brush body comprising protruding stability members. The brush body 2 including the protruding stability members 7 is cut out of a polymer foam. The embodiments shown in figures 3a- 3h show examples of variations that may occur in practice, different embodiments have different stabilising and dampening characteristics. Depending on the washing operation to be performed by the brush according to the present invention, the desired protruding stability members can be chosen. The protruding stability members 7 may be longer for more dampening and stabilizing effect on the brush elements 5, as for example shown in figure 3c. In another embodiment the protruding stability members 7 have rounded shapes as in figure 3h for a smoothened movement of the brush elements. It is also possible that the protruding stability member is at one side in contact with a brush element.

Figures 4a-4h show a schematic side view of various embodiments of a brush body 2 comprising a preferred embodiment of the protruding stability members 7 with various central openings 8a, 8b, 8c, 8d, 8e, 8f, 8g, 8h, 8i of various shapes and/or sizes. Each central opening 8 corresponds to an axis of a particular size and/or shape. Typically, each brand uses their own typical shape for the axis and thus the brush is complementary to the axis. So that in practice the shape corresponds to particular desired/predetermined brands or systems that have said size and/or shape as a standard for their axis and brush assemblies. Preferably the shapes of the central opening are such that due to their shape the brush remains in its position on the axis during rotation of the axis.

Further, an embodiment of a brush element will be shown in a little more detail in figures 5a and 5b. Figure 5a shows an embodiment of a brush element 5 as used in the brush as shown in figure 1. A brush element 5 comprises a first part 5a which is received in the core 3a of the receiving space 3, a second part 5b which runs through the channel 3b of the receiving space and a third part 3b which protrudes from the brush body 2. In this embodiment each brush element 5 comprises one first part 5a, two second parts 5b, and two third parts 5c. The shown brush element 5 is made out of one piece of material, or a laminate of materials. Depending on the purpose of the brush the material can be chosen. The shown embodiment of the third part 5c of the brush element comprises an end portion 5d wherein the brush element is longitudinally divided into multiple smaller elongated brush segments, brush fingers 5'. The brush fingers 5' are optional and preferably used when the brush element is manufactured from a foam material. The brush may also be manufactured from a flexible and soft textile without fingers. For example, if the brush according to the present invention is used for drying operations, the brush element usually has no fingers to enhance the drying effect. For the drying application the brush elements are preferably as wide as possible.

Figure 5b shows an embodiment of the brush element 5 as if it is positioned within a brush body. The first part 5a is received in the core 3a of a receiving space 3, and this is filled with a support member 6. In this example the support member 6 has the shaped of a rod and is preferably used in combination with a complementary round-shaped core 3a of a receiving space. The support member 6 is in this embodiment manufactured from the same polymer foam material as the cover plate 4 and the brush body 2 and these elements are affixed due to plastic welding. Due to this connection the brush element 5 is affixed within the brush body 2. The brush elements 5 may be more stiff or flexible depending on the application.

In the shown embodiment of the brush element in figure 5, the brush element is made out of one piece of material, or a laminated material. It is also possible that part(s) 5c, the part which extends from the brush body outwards, is/are removable from the parts 5a and 5b, such that the part(s) 5c can be removed and replaced.

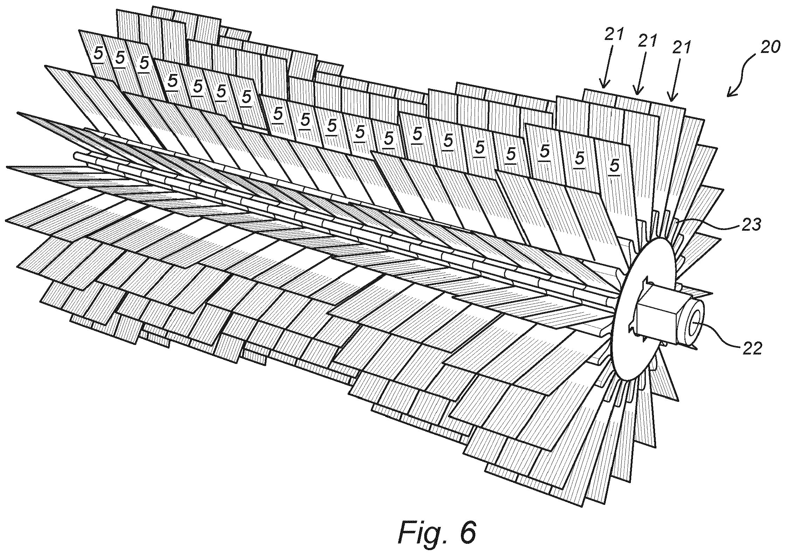

Figure 6 shows an embodiment of a brush assembly 20 comprising an axis 22 and multiple adjacent brushes 21 which are fixated on said axis 22. In the embodiment shown, the brush bodies 23 of the brushes 21 are positioned such on the axis 22 that the receiving spaces and thus the brush elements are mutually aligned. The shape of the central openings of the brushes 21 are complementary to the shape of the axis 22.

The invention is defined in the claims.

The verb 'comprise' and its conjugations as used in this patent document are understood to mean not only 'comprise', but to also include the expressions 'contain', 'substantially contain', 'formed by' and conjugations thereof.

The term vehicle washing system as used in this patent document are understood to mean not only washing, but to also include a vehicle polishing system, a vehicle buffing system and a vehicle drying system.

## Claims

1. Brush (1) for a vehicle washing system, comprising:
- at least one brush body (2) comprising multiple receiving spaces (3);
- multiple brush elements (5); and
- at least one cover element (4);
wherein at least part of at least one brush element (5), and preferably of each brush element (5), is received within part of a receiving space (3) and wherein at least a further part of said brush element (5) extends with respect to the brush body (2); and wherein the cover element (4) is attached to the brush body (2) such that said cover element (4) covers at least part of the receiving spaces (3), wherein at least part of the brush body (2) and at least part of at least one cover element (4) are made of a polymer material and wherein the brush body (2) and the cover element (4) are connected via plastic welding.

2. Brush (1) according to claim 1, wherein at least part of the brush body (2) and at least part of at least one cover element (4) are made of a substantially similar polymer material, in particular wherein at least part of the brush body (2) and at least part of at least one cover element (4) are made of a polymer foam.

3. Brush (1) according to any of the previous claims, wherein at least part of the brush body (2) and/or at least part of the cover element (4) are made of a polymer material comprising extruded polyethylene and/or closed cell foam and/or open cell foam and/or polyethylene foam and/or polyurethane foam.

4. Brush (1) according to any of the previous claims, wherein at least part of the receiving spaces (3) are provided at an outer edge of the brush body (2) and/or wherein at least one, and preferably each receiving space (3) defines a channel and (3b) a core segment (3a).

5. Brush (1) according to any of the previous claims, wherein at least one brush element (5) comprises at least one support member (6) which is made of a polymer material.

6. Brush (1) according to any of the previous claims, wherein the brush body (2) comprises at least two opposing side surfaces, wherein at least one, and preferably each receiving space (3) extends between said side surfaces.

7. Brush (1) according to any of the previous claims, comprising at least two cover elements (4), wherein the brush body (2) comprises at least two opposing side surfaces and wherein a first cover element (4) is attached to a first side surface and a second cover element (4) is attached to a second side surface such that said cover elements (4) substantially enclose at least part of the brush body (2).

8. Brush (1) according to any of the previous claims, wherein the brush body (2) comprises multiple protruding stability members (7), wherein at least one, and preferably each stability member (7) is positioned between (two) adjacent brush elements (5), preferably wherein at least one and preferably each stability member (7) forms integral part of the brush body (2).

9. Brush (1) according to claim 7 , wherein the stability members (7) have a length which is shorter than the part of the brush element (5) which extends with respect to the brush body (2).

10. Brush (1) according to any of the previous claims, wherein the brush elements (5) are made of a polymer material, or a textile and/or a hybrid version thereof.

11. Brush assembly comprising an axis and multiple adjacent brushes (1) according to any of the claims 1-10.

12. Use of a brush (1) according to any of claims 1-10 in a vehicle washing system.

13. Method of producing a brush (1) for a vehicle washing system according to any of claims 1-10, comprising the steps of:
- providing at least one brush body (2) comprising multiple receiving spaces (3), wherein at least part of said brush body (2) is made of a polymer material;
- providing multiple brush elements (5) and positioning at least part of at least one brush elements (5) and preferably each brush element (5) in a receiving space (3) such that at least a further part of said brush element (5) extends with respect to the brush body (2);
- providing at least one cover element (4) wherein at least part of said cover element (4) is made of a polymer material, and positioning the cover element (4) upon the brush body (2) such that said cover element (4) covers at least part of the receiving spaces (3); and
- attaching the at least one cover element (4) to the brush body (2) via plastic welding.

14. Method according to claim 13, wherein providing at least one brush body (2) comprises a cutting operation for cutting out the brush body (2) from a polymer material, in particular a polymer foam and/or wherein at least one brush element (5) comprises at least one support member (6) which is made of a polymer material.

## Patentansprüche

1. Bürste (1) für eine Fahrzeugwaschanlage, umfassend:
- mindestens einen Bürstenkörper (2), umfassend mehrere Aufnahmeräume (3);
- mehrere Bürstenelemente (5); und
- mindestens ein Abdeckungselement (4);
wobei zumindest ein Teil mindestens eines Bürstenelements (5), und vorzugsweise jedes Bürstenelements (5), innerhalb eines Teils eines Aufnahmeraums (3) aufgenommen ist und wobei sich zumindest ein weiterer Teil des Bürstenelements (5) in Bezug zum Bürstenkörper (2) erstreckt;
und wobei das Abdeckungselement (4) derart am Bürstenkörper (2) befestigt ist, dass das Abdeckungselement (4) zumindest einen Teil der Aufnahmeräume (3) bedeckt, wobei zumindest ein Teil des Bürstenkörpers (2) und zumindest ein Teil mindestens eines Abdeckungselements (4) aus einem Polymermaterial gefertigt sind und wobei der Bürstenkörper (2) und das Abdeckungselement (4) mittels Kunststoffschweißens verbunden sind.

2. Bürste (1) nach Anspruch 1, wobei zumindest ein Teil des Bürstenkörpers (2) und zumindest ein Teil mindestens eines Abdeckungselements (4) aus einem im Wesentlichen ähnlichen Polymermaterial gefertigt sind, insbesondere wobei zumindest ein Teil des Bürstenkörpers (2) und zumindest ein Teil mindestens eines Abdeckungselements (4) aus einem Polymerschaumstoff gefertigt sind.

3. Bürste (1) nach einem der vorstehenden Ansprüche, wobei zumindest ein Teil des Bürstenkörpers (2) und/oder zumindest ein Teil des Abdeckungselements (4) aus einem Polymermaterial gefertigt sind, das stranggepresstes Polyethylen und/oder geschlossenzelligen Schaumstoff und/oder offenzelligen Schaumstoff und/oder Polyethylenschaumstoff und/oder Polyurethanschaumstoff umfasst.

4. Bürste (1) nach einem der vorstehenden Ansprüche, wobei zumindest ein Teil der Aufnahmeräume (3) an einer Außenkante des Bürstenkörpers (2) vorgesehen ist und/oder wobei zumindest ein, und vorzugsweise jeder Aufnahmeraum (3) einen Kanal (3b) und ein Kernsegment (3a) definiert.

5. Bürste (1) nach einem der vorstehenden Ansprüche, wobei mindestens ein Bürstenelement (5) mindestens ein Stützelement (6) umfasst, das aus einem Polymermaterial gefertigt ist.

6. Bürste (1) nach einem der vorstehenden Ansprüche, wobei der Bürstenkörper (2) mindestens zwei entgegengesetzte Seitenflächen umfasst, wobei sich mindestens ein, und vorzugsweise jeder Aufnahmeraum (3) zwischen den Seitenflächen erstreckt.

7. Bürste (1) nach einem der vorstehenden Ansprüche, umfassend mindestens zwei Abdeckungselemente (4), wobei der Bürstenkörper (2) mindestens zwei entgegengesetzte Seitenflächen umfasst und wobei ein erstes Abdeckungselement (4) an einer ersten Seitenfläche befestigt ist und ein zweites Abdeckungselement (4) an einer zweiten Seitenfläche befestigt ist, sodass die Abdeckungselemente (4) zumindest einen Teil des Bürstenkörpers (2) im Wesentlichen umschließen.

8. Bürste (1) nach einem der vorstehenden Ansprüche, wobei der Bürstenkörper (2) mehrere vorstehende Stabilitätselemente (7) umfasst, wobei mindestens ein, und vorzugsweise jedes Stabilitätselement (7) zwischen (zwei) angrenzenden Bürstenelementen (5) positioniert ist, vorzugsweise wobei mindestens ein und vorzugsweise jedes Stabilitätselement (7) einen integralen Teil des Bürstenkörpers (2) ausbildet.

9. Bürste (1) nach Anspruch 7, wobei die Stabilitätselemente (7) eine Länge aufweisen, die kürzer ist als der Teil des Bürstenelements (5), der sich in Bezug zum Bürstenkörper (2) erstreckt.

10. Bürste (1) nach einem der vorstehenden Ansprüche, wobei die Bürstenelemente (5) aus einem Polymermaterial, oder einem Textil und/oder einer Mischversion davon gefertigt sind.

11. Bürstenanordnung, umfassend eine Achse und mehrere angrenzende Bürsten (1) nach einem der Ansprüche 1-10.

12. Verwendung einer Bürste (1) nach einem der Ansprüche 1-10 in einer Fahrzeugwaschanlage.

13. Verfahren zur Herstellung einer Bürste (1) für eine Fahrzeugwaschanlage nach einem der Ansprüche 1-10, die folgenden Schritte umfassend:
- Vorsehen mindestens eines Bürstenkörpers (2), umfassend mehrere Aufnahmeräume (3), wobei zumindest ein Teil des Bürstenkörpers (2) aus einem Polymermaterial gefertigt ist;
- Vorsehen mehrerer Bürstenelements (5) und Positionieren zumindest eines Teil des mindestens einen Bürstenelements (5) und vorzugsweise jedes Bürstenelements (5) in einem Aufnahmeraum (3), sodass sich zumindest ein weiterer Teil des Bürstenelements (5) in Bezug zum Bürstenkörper (2) erstreckt;
- Vorsehen mindestens eines Abdeckungselements (4), wobei zumindest ein Teil des Abdeckungselements (4) aus einem Polymermaterial gefertigt ist, und Positionieren des Abdeckungselements (4) auf dem Bürstenkörper (2), sodass das Abdeckungselement (4) zumindest einen Teil der Aufnahmeräume (3) bedeckt; und
- Befestigen des mindestens einen Abdeckungselements (4) am Bürstenkörper (2) mittels Kunststoffschweißens.

14. Verfahren nach Anspruch 13, wobei das Vorsehen mindestens eines Bürstenkörpers (2) einen Schneidvorgang zum Ausschneiden des Bürstenkörpers (2) aus einem Polymermaterial, insbesondere einem Polymerschaumstoff umfasst und/oder wobei mindestens ein Bürstenelement (5) mindestens ein Stützelement (6) umfasst, das aus einem Polymermaterial gefertigt ist.

## Revendications

1. Brosse (1) pour un système de lavage de véhicule, comprenant :
- au moins un corps de brosse (2) comprenant de multiples espaces de réception (3) ;
- de multiples éléments de brosse (5) ; et
- au moins un élément de recouvrement (4) ;
dans laquelle au moins une partie d'au moins un élément de brosse (5), et de préférence de chaque élément de brosse (5), est reçue à l'intérieur d'une partie d'un espace de réception (3) et dans laquelle au moins une autre partie dudit élément de brosse (5) s'étend relativement au corps de brosse (2) ; et dans laquelle l'élément de recouvrement (4) est attaché au corps de brosse (2) de telle sorte que ledit élément de recouvrement (4) recouvre au moins une partie des espaces de réception (3), dans laquelle au moins une partie du corps de brosse (2) et au moins une partie d'au moins un élément de recouvrement (4) sont faites d'un matériau polymère et dans laquelle le corps de brosse (2) et l'élément de recouvrement (4) sont raccordés par soudage de plastique.

2. Brosse (1) selon la revendication 1, dans laquelle au moins une partie du corps de brosse (2) et au moins une partie d'au moins un élément de recouvrement (4) sont faites de matériaux polymères sensiblement similaires, en particulier dans laquelle au moins une partie du corps de brosse (2) et au moins une partie d'au moins un élément de recouvrement (4) sont faites d'une mousse de polymère.

3. Brosse (1) selon l'une quelconque des revendications précédentes, dans laquelle au moins une partie du corps de brosse (2) et/ou au moins une partie de l'élément de recouvrement (4) sont faites d'un matériau polymère comprenant du polyéthylène extrudé et/ou une mousse à cellules fermées et/ou une mousse à cellules ouvertes et/ou une mousse de polyéthylène et/ou une mousse de polyuréthanne.

4. Brosse (1) selon l'une quelconque des revendications précédentes, dans laquelle au moins une partie des espaces de réception (3) sont placés au niveau d'un bord extérieur du corps de brosse (2) et/ou dans laquelle au moins un, et de préférence chaque espace de réception (3) définit un canal (3b) et un segment de noyau (3a).

5. Brosse (1) selon l'une quelconque des revendications précédentes, dans laquelle au moins un élément de brosse (5) comprend au moins un élément de support (6) qui est fait d'un matériau polymère.

6. Brosse (1) selon l'une quelconque des revendications précédentes, dans laquelle le corps de brosse (2) comprend au moins deux surfaces latérales opposées, dans laquelle au moins un, et de préférence chaque espace de réception (3) s'étend entre lesdites surfaces latérales.

7. Brosse (1) selon l'une quelconque des revendications précédentes, comprenant au moins deux éléments de recouvrement (4), dans laquelle le corps de brosse (2) comprend au moins deux surfaces latérales opposées et dans laquelle un premier élément de recouvrement (4) est attaché à une première surface latérale et un second élément de recouvrement (4) est attaché à une seconde surface latérale de telle sorte que lesdits éléments de recouvrement (4) entourent sensiblement au moins une partie du corps de brosse (2).

8. Brosse (1) selon l'une quelconque des revendications précédentes, dans laquelle le corps de brosse (2) comprend de multiples éléments de stabilité saillants (7), dans laquelle au moins un, et de préférence chaque élément de stabilité (7) est placé entre (deux) des éléments de brosse (5) qui sont adjacents, de préférence dans laquelle au moins un et de préférence chaque élément de stabilité (7) fait partie intégrante du corps de brosse (2).

9. Brosse (1) selon la revendication 7, dans laquelle les éléments de stabilité (7) présentent une longueur qui est inférieure à celle de la partie de l'élément de brosse (5) qui s'étend relativement au corps de brosse (2).

10. Brosse (1) selon l'une quelconque des revendications précédentes, dans laquelle les éléments de brosse (5) sont faits d'un matériau polymère, ou d'un textile et/ou d'une version hybride de ceux-ci.

11. Ensemble brosse comprenant un axe et de multiples brosses (1) adjacentes selon l'une quelconque des revendications 1 à 10.

12. Utilisation d'une brosse (1) selon l'une quelconque des revendications 1 à 10 dans un système de lavage de véhicule.

13. Procédé de production d'une brosse (1) pour un système de lavage de véhicule selon l'une quelconque des revendications 1 à 10, comprenant les étapes suivantes :
- fournir au moins un corps de brosse (2) comprenant de multiples espaces de réception (3), au moins une partie dudit corps de brosse (2) étant faite d'un matériau polymère ;
- fournir de multiples éléments de brosse (5) et disposer au moins une partie d'au moins un élément de brosse (5) et de préférence de chaque élément de brosse (5) dans un espace de réception (3) de telle sorte qu'au moins une autre partie dudit élément de brosse (5) s'étende relativement au corps de brosse (2) ;
- fournir au moins un élément de recouvrement (4), au moins une partie dudit élément de recouvrement (4) étant faite d'un matériau polymère, et disposer l'élément de recouvrement (4) sur le corps de brosse (2) de telle sorte que ledit élément de recouvrement (4) recouvre au moins une partie des espaces de réception (3) ; et
- attacher l'au moins un élément de recouvrement (4) au corps de brosse (2) par soudage de plastique.

14. Procédé selon la revendication 13, dans lequel la préparation d'au moins un corps de brosse (2) comprend une opération de découpe pour découper le corps de brosse (2) dans un matériau polymère, en particulier une mousse polymère et/ou dans lequel au moins un élément de brosse (5) comprend au moins un élément de support (6) qui est fait d'un matériau polymère.
